(19) **Europäisches Patentamt**
**European Patent Office**
**Office européen des brevets**

(11) **EP 4 745 617 A1**

(12) **EUROPEAN PATENT APPLICATION**

(43) Date of publication:
20.05.2026 Bulletin 2026/21

(21) Application number: 25166027.0

(22) Date of filing: 25.03.2025

(51) International Patent Classification (IPC):
**G01S 7/35** (2006.01) **G01S 7/40** (2006.01)
**G01S 13/42** (2006.01) **G01S 13/88** (2006.01)

(52) Cooperative Patent Classification (CPC):
**G01S 7/4021; G01S 7/358; G01S 7/4026;**
**G01S 7/4078; G01S 7/4086; G01S 13/42;**
G01S 13/88

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 15.11.2024 EP 24213277

(71) Applicant: **IHP GmbH - Innovations for High**
**Performance**
**Microelectronics / Leibniz-Institut für**
**innovative Mikroelektronik**
**15236 Frankfurt (Oder) (DE)**

(72) Inventors:
• **Sütbas, Batuhan**
**15236 Frankfurt (Oder) (DE)**
• **Kahmen, Gerhard**
**15236 Frankfurt (Oder) (DE)**

(74) Representative: **Eisenführ Speiser**
**Patentanwälte Rechtsanwälte PartGmbB**
**Stralauer Platz 34**
**10243 Berlin (DE)**

(54) **CALIBRATION OF CONTINUOUS-WAVE SHORT-RANGE RADAR SYSTEM AT INTERMEDIATE FREQUENCY**

(57) A calibration method for operating a CW short-range radar system in obtaining calibrated intermediate frequency in-phase and quadrature outputs comprises measuring at least one reflective static calibration target at a plurality of at least four different target ranges and processing the received CW radar measurement signal by performing a quadrature downconversion of the received CW radar beam intensity and phase to obtain measured intermediate frequency in-phase outputs and intermediate frequency quadrature outputs. These are used to solve a system of equations for calibration parameter values including an amplitude mismatch a phase mismatch between the quadrature signals, and individual DC offsets of the quadrature signals.

Fig. 6

**Description**

FIELD OF THE INVENTION

The present invention is related to a calibration method for operating a continuous-wave, herein CW, short-range radar system, in obtaining calibrated intermediate frequency in-phase and quadrature outputs. It is further related to a method for operating a CW radar system, and to a CW short-range radar system.

BACKGROUND OF THE INVENTION

CW radar systems transmit and simultaneously receive electromagnetic (EM) signals continuously to detect the position, speed, and angular information of one or more targets.

Short-range CW radar systems find contemporary use cases in various applications, such as structural health monitoring of buildings, turbine blade monitoring, indoor localization, fall detection in healthcare units. Such short-range CW radar systems are often non-stationary,, but may also be fixed in position. The term "short range" is not strictly defined. It is used somewhat differently in the various industries where CW radar systems may be used. As used herein, "short range" refers to a distance range of 200 meters or less, in many application cases well under 100 meters. The present specification in particular considers applications for CW radar systems in a distance range under 10 meters, and in some case even below 1 meter, including as an example 10 to 40 centimeters.

In view of the distance range under consideration for a specific application, short-range CW radar systems often operate at higher frequencies, such as in the millimeter-wave bands, e.g., 24 GHz, 61 GHz, or even higher. ISM bands allocated by the International Telecommunication Union (ITU) are used for short-range CW radar applications. for proximity sensing, motion detection, and industrial applications. Higher frequencies correspond to shorter wavelengths, allowing for more precise measurements and better displacement resolution, which is critical for close-range applications. Short-range systems typically use lower transmit power because they only need to cover a limited range. Short-range CW radars are designed for high range resolution, enabling them to detect displacements of a given object with a high spatial resolution.

Thanks to the operation principle being non-contact and non-penetrative in its physical nature, short-range CW radar technology has found many applications in various sectors. The most common use cases of the CW radar include automotive, healthcare, agriculture, transportation, security and surveillance. The present disclosure is relevant for any specific use case scenario. For instance, medical and related applications of short-range CW radar systems include vital signs monitoring systems, eye-blinking detection, respiratory movement measurement based on CW radar sensing. Advanced biomedical solutions for lab-on-chip and point-of-care systems are also made accessible through the development of modern microwave integrated circuits operating in the mm-wave range. Radar sensors are further gaining increasing attention for wireless gesture tracking applications to enhance the human to machine interaction. Complex hand motions including writing letters, numbers and symbols in the air can be sensed and recognized now aiming to revolutionize the way computers and smartphones are used. The high accuracy in motion detection, penetration capability through obstacles, tolerance to ambient conditions such as darkness, dust, or a presence of obstacles, and the more compact and power efficient realizations compared to the camera based alternatives favor the radar sensors for contactless hand gesture detection.

Useful information on one or more targets is extracted by a CW radar system from a received CW radar signal which is reflected back from the target(s). The CW radar transmits a single-tone signal and ideally receives back only the reflected signal from the target which contains the phase modulated information. Assuming an ideal scenario, the transmitted signal $V_T$ has the form of

$$V_T(t) = \cos(2\pi f_c t)$$

where *fc* is the carrier frequency, and t denotes time.

For a non-moving single point target at a nominal distance of $R_0$ with a time-varying displacement of *x(t)*, the received signal $V_R$ (t) reflected from the target is expressed by

$$V_R(t) = \cos\left(2\pi f_c t - \frac{4\pi R_0}{\lambda} - \frac{4\pi x(t)}{\lambda}\right)$$

Here, $\lambda$ is the wavelength of the radar signal, $R_0$ is the nominal target distance and x(t) is a time-varying relative displacement of the target with respect to the radar transceiver, signifying a periodicity as a function of target range.

In CW radar systems, down-conversion of this radio frequency (RF) signal is used. By shifting the received signal to a lower frequency, i.e., the intermediate frequency (IF), it can be more easily processed to extract desired useful information such as the target's relative motion.

IF signals may be obtained by mixing the received RF signal, i.e., the CW radar measurement signal carrying intensity and phase information, with a local oscillator (LO) signal, in particular with an in-phase (I) and a quadrature (Q) component of an LO signal (quadrature down-conversion), which are copies of the transmitted signal, in phase with the transmitted signal and separated by a phase difference of $\pi/2$, respectively. Correspondingly, for such a quadrature radar setup, the IF signal, preferably down converted with an IQ-Mixer, also consists of two components:

- an in-phase (I) component $V_I$, which represents that part of the received signal which is in sync with the LO signal's phase.

- a quadrature (Q) component $V_Q$, which represents the part of the signal that is 90° out of phase with the LO signal.

Thus, after low-pass filtering, the quadrature IF signals take the form of

$$V_I(t) = \cos\left(\frac{4\pi R_0}{\lambda} + \frac{4\pi x(t)}{\lambda}\right)$$

$$V_Q(t) = \sin\left(\frac{4\pi R_0}{\lambda} + \frac{4\pi x(t)}{\lambda}\right)$$

These I/Q components allow a radar system to determine an amplitude change and a magnitude of phase shift in the received signal. In continuous-wave (CW) radar, the phase of the received signal is monitored over time. For a moving target, the phase will exhibit a continuous shift. The rate of this phase shift is directly related to the target's relative speed. Thus, by tracking the phase shift, the radar system can calculate the target's relative speed and relative position.

The displacement information can be recovered by means of an arctangent demodulation, with phase unwrapping using an appropriate selection of the integer k, as

$$\hat{R}(t) = \frac{\arctan(V_Q/V_I) - 2k\pi}{4\pi/\lambda}$$ .

Ideally, a receiver should generate perfectly balanced in-phase (I) and quadrature (Q) IF signals. In real-world CW radar systems, however, impairments in IF signals in the form of phase- and amplitude imbalances and DC offsets are observed.

It would thus be desirable to improve the accuracy of short-range continuous-wave radar systems.

In accordance with a first aspect of the present invention, this is achieved with a calibration method for operating a continuous-wave, herein CW, short-range radar system, in obtaining calibrated intermediate frequency in-phase and quadrature outputs is disclosed.

The method comprises:

- measuring at least one reflective static calibration target at a plurality j of at least four different target ranges $R_c = k\lambda/2 + R_j$ from a radar transceiver that differ in their value of a remainder range $R_j$, wherein $R_c$ is the target range between the calibration target and the radar transceiver, $\lambda$ is a wavelength of the radar beam provided by the radar transceiver, signifying a periodicity of the DC offset as a function of target range and k is any non-negative integer,;

The measuring comprises, for each of the j target ranges, at which the calibration target is measured,

- transmitting a CW radar beam toward the calibration target;
- measuring a received CW radar beam intensity and phase of the CW radar beam that is scattered back from the calibration target, as a CW radar measurement signal carrying intensity and phase information;

The method further comprises processing the received CW radar measurement signal by

- performing a quadrature down-conversion of the CW radar measurement signal to obtain measured intermediate frequency in-phase outputs $V_{IFcal,I}(j)$ and intermediate frequency quadrature outputs $V_{IFcal,Q}(j)$;

- using the obtained intermediate frequency in-phase and quadrature outputs, solving the following equation system of 2j, that is at least 8, equations

$$V_{\mathrm{IFcal,I}}(j) = \cos\left(\frac{4\pi R_j}{\lambda}\right) + V_{\mathrm{L,I}}$$

$$V_{\mathrm{IFcal,Q}}(j) = (1 + \epsilon)\sin\left(\frac{4\pi R_j}{\lambda} + \theta\right) + V_{\mathrm{L,Q}}$$

,

to determine 4+j unknown parameter values which are the j remainder position values $R_j$, $\varepsilon$, $\theta$, $V_{\mathrm{L,I}}$, and $V_{\mathrm{L,Q}}$.

Here, $\varepsilon$ denotes an amplitude mismatch and $\theta$ denotes a phase mismatch between the quadrature signals, which may occur in a non-ideal receiver, and $V_{\mathrm{L,I}}$, and $V_{\mathrm{L,Q}}$ denote respective DC offsets, which may be partly associated with signal leakage paths from a radar transmitter back to a radar receiver due to a finite amount of isolation within the radar system. Other factors associated with DC offsets are harmonics of the local oscillator (LO) leaking back to the receiver, and the same leakage mechanisms within the mixer itself, dc offsets in the mixer etc.

The thus obtained parameter values may then be used in determining calibrated useful radar measurement information in a radar measurement of a desired application target.

The method of the present invention is based on the following analysis and recognitions.

The nature of continuous transmission and reception of the CW radar makes transmitter (TX)-to-receiver (RX) leakage a significant and unavoidable issue. Impairments in quadrature IF signals primarily result from non-idealities in both the the TX (transmit) and RX (receive) path, for instance due to imperfections in the RX circuitry and the isolation between RX and TX of the radar transceiver. In particular, due to a limited isolation within the radar's circuitry, part of the TX signal leaks back into the RX path. The leakage paths from the TX circuitry to the RX circuitry can be described with coupling coefficients of $Li$ and phase of $\phi_i$. Practical implementations also often have minor mismatches in amplitude ($\varepsilon$) and phase ($\theta$). The signal leakage results in a DC offset that may exceed a weak useful reflected signal by several orders of magnitude. On top of that, the I/Q mixers have DC offsets due to imbalances, and limited port isolation at the chip-level and reflection from the static environmental clutter creates DC offset as well.

Observed as a result are a quadrature imbalance, which is a deviation from the ideal 90° phase difference between I and Q components, and/or an amplitude imbalance, which is a difference in signal power between I and Q channels. Since these imbalances affect the IF signal by distorting the phase and amplitude, they reduce the radar system's ability to accurately detect relative position or speed.

The quadrature IF signals in this case can be described as

$$V_I(t) = \cos\left(\frac{4\pi R_0}{\lambda} + \frac{4\pi x(t)}{\lambda}\right) + \sum_i L_i\cos(\phi_i)$$

$$V_Q(t) = (1 + \epsilon)\sin\left(\frac{4\pi R_0}{\lambda} + \frac{4\pi x(t)}{\lambda} + \theta\right) + \sum_i (1 + \epsilon)L_i\sin(\phi_i - \theta)$$

The TX-RX leakage introduces a constant component (DC offset) in the IF output because the leaked TX signal combines with the received RX signal, creating a "self-mixing" effect leading to a DC component in the down converted signal. The RF leakage and the associated DC offset problems are especially critical for applications with a small useful signal, such as vital signs detection applications where a signal reflected for instance from the chest wall of the monitored patient is usually weaker by several orders of magnitude compared to the leaked signal (e.g. on the chip), and the useful information can be lost in the DC offset level. Therefore, RF leakage cancellation techniques and DC offset compensation methods are crucial for accurate operation.

Conventionally, an ellipse fitting algorithm is applied here after plotting $V_I(t)$ and $V_Q(t)$ on a Cartesian plane, cf. A. Fitzgibbon, M. Pilu and R. B. Fisher, "Direct least square fitting of ellipses," in IEEE Transactions on Pattern Analysis and Machine Intelligence, vol. 21, no. 5, pp. 476-480, May 1999, doi: 10.1109/34.765658. While the ideal amplitude-phase curve would be a circle, various non-ideal effects reshape it into an ellipse shifted out of the IQ-origin whose form is given by the impairment terms and its translation from the origin by the DC offset terms. When the target moves or vibrates and enough points on the ellipse are collected, the impairment and DC offset terms can be estimated and subsequently removed from the signal in post-processing before applying the arctan demodulation. However, applying the mentioned ellipse fitting algorithm reliably on the curve obtained from the target measurement itself can be quite complicated, especially for targets with complex geometry or non-metallic material composition.

Therefore, other methods of dealing with the dc offset at the IF output are needed.

This is achieved, in accordance with the present disclosure, by obtaining an estimate of the parameters related to impairment obtained by a calibration measurement with a known target involving a sampling of the IF outputs in this case. Such an initial calibration step is powerful yet simple because the exact distance to the calibration target need not be known, as evident from the equations for $VI(t)$ and $VQ(t)$ provided above. The trigonometric terms involving $4\pi R_0/\lambda$ are periodic and therefore calibration targets with $k\lambda/2$ spacing yield the same output, where k is any integer. The calibration measurement is to be performed with a known target (or a multitude of such known targets) at several distances to collect enough data points to apply the ellipse fitting algorithm.

Afterwards, an orthogonalization process such as a Gram-Schmidt process or any other suitable known orthogonalization process is performed to obtain the calibrated signals after dc offset removal as follows:

$$\begin{bmatrix} \widehat{V_I}(t) \\ \widehat{V_Q}(t) \end{bmatrix} = \begin{bmatrix} 1 & 0 \\ -\tan(\theta) & \sec(\theta)/(1+\epsilon) \end{bmatrix} \begin{bmatrix} V_I(t) - \sum_i f_I(L_i, \phi_i) \\ V_Q(t) - \sum_i f_Q(L_i, \phi_i) \end{bmatrix}$$

where $f_I$ and $f_Q$ represent the quadrature dc offset terms stemming from the superimposed TX to RX signal leakages.

The method of the present invention is especially suited for applications where the target movement or vibration frequency is extremely low (e.g. breathing rate of a human) and the dc offset present in the IF signal is unavoidable yet detrimental to the useful information. However, the present invention is not limited to applications involving such extremely low frequencies. As the RF frequency is in the GHz range, there is basically no limitation of applicability of the invention with regard to the vibration frequency. Especially industrial applications may have vibrating frequencies up to the kHz range or even higher, for instance considering piezo based actuators.

Providing the at least one reflective static calibration target at a plurality j of at least four different target ranges may comprise

- providing at a fixed position from a measurement unit for transmitting and receiving the CW radar beam a single calibration target that has different reflective surfaces, the different reflective surfaces being arranged at the different target ranges, wherein
- the calibration target may be arranged within a housing of the CW radar system that further comprises the measurement unit.

Thus, instead of positioning one or more static targets for calibration to recover the impairment terms before the measurement of the actual target, a single calibration target may be used that comprises different reflective surfaces at different target ranges from the measurement unit.

The calibration target can be implemented in different ways. A single movable target at different distances from the positioned radar system may be used. Instead of using a movable target, a plurality of targets at different distances from the positioned radar system may be used. As an alternative to using one or more dedicated calibration targets, the method may comprise positioning the radar system in an environment comprising an arbitrary set of reflective static objects at different distances from the positioned radar system, and selecting the calibration targets from the arbitrary set of reflective static objects. The target positions may thus be provided randomly, i.e., without a dedicated and pre-planned calibration pattern or structure, for instance taking a given environment containing a plurality of randomly placed targets. This may be particularly easy to implement in industrial applications, for instance in an environment of a manufacturing site comprising machines with with reflecting fixed parts, in particular metallic components, which may be used as targets, or in in a medical environment, for instance with a patient's bed having reflecting fixed parts can be used as calibration targets without having the need of an additional calibration target. As an alternative the one or more calibration targets may be systematically placed in a dedicated pre-planned calibration setting.

Preferably, transmitting the CW radar beam toward the calibration target comprises performing electronic beam steering of an antenna system. In particular, by coherently adjusting phase and amplitude across antenna elements in a phased array antenna system, highly accurate digital beam forming and beam steering can be achieved. Depending on the antenna geometry, this technique achieves a high spatial resolution and allows for flexible control over the beam's direction without physical movement, which enhances agility and tracking in real-time scenarios. By modulating the phase, the constructive and destructive interference directs the beam in desired directions. Phased arrays are versatile and provide electronic steering over a wide angular range, which is useful for applications requiring rapid, multi-directional scanning without physical movement. They can be configured for CW radar to achieve high-speed scanning and are particularly advantageous in environments with multiple moving targets.

As an alternative, mechanical beam steering with an antenna may be performed by driving a mechanical alignment system holding the antenna. Mechanically steered antennas, like parabolic reflectors, can be moved by motors or servo systems that pivot the antenna structure itself. Although slower than electronic steering, mechanical steering is highly reliable and robust. Combinations of mechanical and electronic steering may be used as well. For example, a rotating base may provide coarse positioning, while a phased array controls fine adjustments.

A second aspect of the present invention is a method for operating a CW radar system. The method comprises

- performing the calibration method according to the first aspect of the invention or any of its embodiments disclosed herein; and

- performing an application radar measurement to measure one or more application targets using the results of the performed calibration method.

Performing the application radar measurement to measure one or more application targets may comprise:

- transmitting the CW radar beam toward a desired application target;

- measuring a received CW radar beam intensity and phase of the CW radar beam that is scattered back from the desired application target as a CW radar measurement signal carrying intensity and phase information;

- performing a quadrature down-conversion of the received CW radar measurement signal to obtain measured intermediate frequency in-phase and quadrature outputs associated with the desired application target;

- removing the DC offset terms $V_{L,I}$, and $V_{L,Q}$ from the obtained intermediate frequency in-phase and quadrature outputs associated with the desired application target;

- using the parameters $\varepsilon$, $\theta$, in an orthogonalization process to obtain calibrated intermediate frequency in-phase and quadrature outputs associated with the desired application target.

- extracting a desired useful signal from the calibrated intermediate frequency in-phase and quadrature outputs associated with the desired target.

Thus, according to the method of the second aspect of the invention, based on knowledge of the RX imbalance parameters achieved by performing the calibration method, amplitude and phase imbalances in the IF in-phase and quadrature outputs are compensated for in the signal processing of the application radar measurement.

The calibration method may be performed repeatedly over an operation time of the CW radar system to update the calibration. The time duration between calibration updates, i.e., the calibration cycles, may adapt automatically, for instance in response to changing environmental conditions, as determined by environmental sensors.

Also, the calibration method may be performed as a background process, in other words, as a background calibration, while performing the application radar measurement as a foreground process.

According to a third aspect of the present invention, a CW short-range radar system is provided, which comprises a measurement unit configured to:

- perform a calibration measurement of at least one reflective static calibration target at a plurality j of at least four different target ranges $Rc = k\lambda/2 + R_j$ from a radar transceiver that differ in their value of a remainder range Rj, wherein

  Rc is the target range between the calibration target and the radar transceiver, $\lambda$ is a wavelength of the radar beam provided the radar transceiver,
  k is any non-negative integer, signifying a periodicity of the DC offset as a function of target range;

- in performing the calibration measurement for each of the j target ranges, at which the calibration target is to be measured, to

  - transmit a CW radar beam toward the calibration target;

  - measure a received CW radar beam intensity and phase of the CW radar beam that is scattered back from the calibration target, as a CW radar measurement signal carrying intensity and phase information;

- perform a quadrature down-conversion of the received CW radar measurement signal to obtain measured intermediate frequency in-phase and quadrature outputs; and,

- in performing an application measurement of a desired application target,

  - to transmit the CW radar beam toward the desired application target;

  - to measure a received CW radar beam intensity and phase of the CW radar beam that is scattered back from the desired application target, as a CW radar measurement signal that carries intensity and phase information;

  - to perform a quadrature down-conversion of the received CW radar measurement signal to obtain measured intermediate frequency in-phase and quadrature outputs associated with the desired application target.

The CW short-range radar system further comprises a signal processing unit, which is configured,

- using the obtained intermediate frequency in-phase and quadrature outputs obtained for the calibration target, to solve the following equation system of 2j, that is at least 8, equations

$$V_{IFcal,I}(j) = \cos\left(\frac{4\pi R_j}{\lambda}\right) + V_{L,I}$$

$$V_{IFcal,Q}(j) = (1 + \epsilon)\sin\left(\frac{4\pi R_j}{\lambda} + \theta\right) + V_{L,Q}$$,

to determine 4+j unkown parameter values which are the j remainder position values Rj, ε, θ, VL,I , and VL,Q;
- using the obtained intermediate frequency in-phase and quadrature outputs obtained for the desired application target, to remove the DC offset terms VL,I, and VL,Q from the obtained intermediate frequency in-phase and quadrature outputs associated with the desired application target;
- using the parameters ε, θ, in an orthogonalization process, to obtain calibrated intermediate frequency in-phase and quadrature outputs associated with the desired target; and to
- extract a desired useful signal from the calibrated intermediate frequency in-phase and quadrature outputs associated with the desired application target.

The CW radar system of the third aspect of the invention shares the advantages described in the contexts of the methods of the first and second aspects of the invention. Also, the description of optional additional features of the methods of the first and second aspects of the invention has a direct correspondence to additional optional features of the CW radar system of the third aspect of the invention.

In particular, the signal processing unit may be configured to perform as the orthogonalization process a Gram-Schmidt orthogonalization process, comprising determining the calibrated intermediate frequency in-phase and quadrature outputs by calculating

$$\begin{bmatrix} V_{IF,I,cal}(t) \\ V_{IF,Q,cal}(t) \end{bmatrix} = \begin{bmatrix} 1 & 0 \\ -\tan(\theta) & \frac{\sec(\theta)}{1+\epsilon} \end{bmatrix} \begin{bmatrix} V_{IF,I}(t) - V_{L,I} \\ V_{IF,Q}(t) - V_{L,Q} \end{bmatrix}$$.

The calibration target may be a single calibration target that is arranged at a fixed position and together with the measurement unit within a housing of the CW radar system and that has different reflective surfaces, the different reflective surfaces being arranged at the different target ranges. For instance, a reflective target with notch features in the target surface may be added in a radar module forming the measurement unit and illuminated during the calibration step. The enables the calibration measurements at various distances without having to move the target or the radar module or the calibration target.

As discussed previously, the measurement unit may comprise a MIMO antenna system for transmitting the CW radar beam toward the calibration target, and a measurement control unit, which is configured to perform electronic beam steering of the MIMO antenna system.

Preferably, the measurement unit is configured to perform the calibration method repeatedly over an operation time of the CW radar system to update the calibration.

The CW radar system may be configured to perform the application radar measurement to measure one or more application targets as a foreground process and to perform the calibration method of the first aspect of the invention as a background process embedded in the foreground process.

BRIEF DESCRIPTION OF THE DRAWINGS

In the drawings,

Fig. 1 is a diagram illustrating an effect of various receiver impairments on the on in-phase and quadrature phase IF signals and DC offset obtained from short-range cw radar measurements.

Fig. 2 is an illustration of simulated I/Q plots in the presence of RX mismatches in the form of amplitude and phase imbalance for different parameter settings;

Fig. 3 is a flow diagram of a calibration method for operating a CW short-range radar system in obtaining calibrated intermediate frequency in-phase and quadrature outputs, in accordance with the present invention;

Fig. 4 is a diagram showing measured DC offset with a superimposed repetitive curve and fitted sinusoidal functions as a function of a relative position of a calibration target used in the calibration measurements;

Fig. 5 is a flow diagram of a method for operating a CW radar system;

Fig. 6 is a simplified block diagram of a CW short-range radar system in accordance with the present invention;

Fig. 7 is an illustration of a further exemplary measurement unit of a CW short range radar system in the form of a phased array arrangement having an antenna array with phase shifters and gain settings;

Fig. 8 is an illustration of a calibration target CT that is suitable for co-integration with a measurement unit into a common housing.

DETAILED DESCRIPTION OF THE DRAWINGS

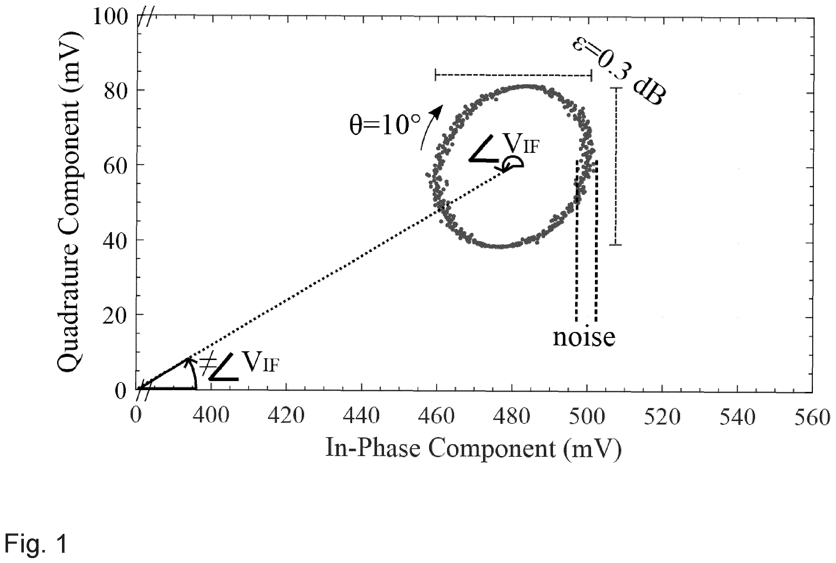

Fig. 1 is a diagram illustrating an effect of various RX impairments on the on in-phase and quadrature phase IF signals obtained from short-range cw radar measurements.

The nature of continuous transmission and reception of the CW radar makes TX-to-RX leakage a significant and unavoidable issue. The signal leakage results in a dc offset which may be several magnitudes stronger than a weak useful signal, for instance in the case of a cw radar signal reflected from the chest wall of a monitored patient and damped due to travelling across the distance between the patient and the RX side of the CW radar. On top of that, as mentioned before, I/Q mixers may have dc offsets due to imbalances and limited port isolation at the chip-level.

The effect signal leakage on the IF output may be considered in a mathematical manner with many paths of leakage. If there are i signal leakage paths with amplitudes Li reaching the RX port with phases of $\phi i$, then the additional term $V_L$ that would appear in the received signal, assuming that the leakage paths are short enough that the associated PN can be considered unchanged, reads as

$$V_L(t) = \sum_i L_i \cos\left[2\pi f_c t + \phi(t) + \phi_i\right]$$

and creates the additional terms VIFL,I and VIFL,Q in the I/Q IF signals

$$V_{IFL,I}(t) = \sum_i L_i \cos\left[4\pi f_c t + 2\phi(t) + \phi_i\right]$$

$$+ \sum_i L_i \cos\left(\phi_i\right)$$

$$V_{\mathrm{IFL,Q}}(t) = \sum_i (1 + \epsilon) L_i \sin\left[4\pi f_c t + 2\phi(t) + \theta + \phi_i\right]$$
$$+ \sum_i (1 + \epsilon) L_i \sin\left(\phi_i - \theta\right)$$

After the eventual low-pass filtering at the baseband before sampling, the low-pass filtered I- and Q- IF signals remain as

$$V_{\mathrm{IFLPF,I}}(t) = \cos\left[\frac{4\pi R_0}{\lambda} + \frac{4\pi x(t)}{\lambda} + \Delta\phi(t)\right]$$
$$+ \sum_i L_i \cos\left(\phi_i\right)$$

$$V_{\mathrm{IFLPF,Q}}(t) = (1 + \epsilon) \sin\left[\frac{4\pi R_0}{\lambda} + \frac{4\pi x(t)}{\lambda} + \theta + \Delta\phi(t)\right]$$
$$+ \sum_i (1 + \epsilon) L_i \sin\left(\phi_i - \theta\right)$$

which have the dc offset components on the desired signals as expected.

For a static target with x(t) = 0 and with the close-in correlation, the DC offset at the quadrature IF output become

$$V_{\mathrm{IFdc,I}} = \cos\left(\frac{4\pi R_0}{\lambda}\right) + \sum_i L_i \cos\left(\phi_i\right)$$

$$V_{\mathrm{IFdc,Q}} = (1 + \epsilon) \sin\left(\frac{4\pi R_0}{\lambda} + \theta\right) + \sum_i (1 + \epsilon) L_i \sin\left(\phi_i - \theta\right)$$

The second terms, which are the leakage terms in these equations, do not change with the target range. This shows that by recording the dc offset for a highly reflective target at various known ranges, the dc offset and the phase and amplitude imbalances can be calculated and compensated for in the complete system.

Plotting the quadrature component $V_{\mathrm{IF,Q}}$ over the in-phase component $V_{\mathrm{IF,I}}$ (determined using the arctangent demodulation method indicated by $\angle V_{\mathrm{IF}}$ in the I/Q diagram of Fig. 1 for an arbitrary IF signal with various impairments, a translation of an ideal circle in the Cartesian plane away from the origin is observed. Thus, the phase demodulation is incorrect unless these dc offset levels are considered, which here in this example amount to 480mV and 60mV in the I and Q components, respectively.

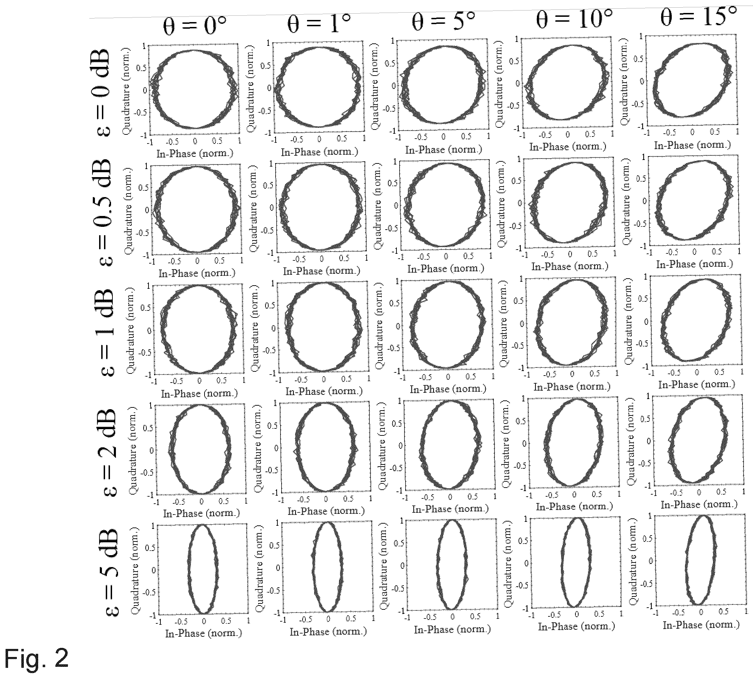

Fig 2 is an illustration of simulated I/Q plots in the presence of RX mismatches in the form of amplitude and phase imbalance for different parameter settings, illustrating the effects of different respective amounts of the parameters representing an amplitude mismatch, $\epsilon$, and a phase mismatch, $\theta$, between the quadrature signals. As can be seen by comparison of the different I/Q plots along variations of $\epsilon$ (in the vertical direction) and $\theta$ (in the horizontal direction), the ideal circle for $\epsilon$ =0 and $\theta$ = 0 is reshaped into an ellipse by amplitude imbalance in the IF signal with increasing $\epsilon$, and increasing phase imbalance $\theta$ rotates the ellipse. It is noted, but not of importance in the present discussion, that for a simulation of noise in the plots a random variable was set.

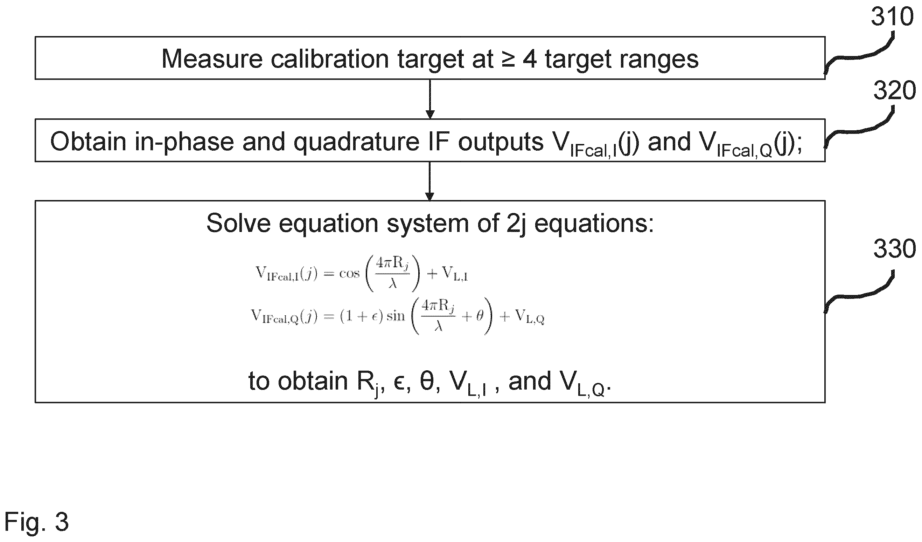

In the following, an example for correcting a received cw radar signal for these imbalances by calibration is explained with reference to Fig. 3. Fig. 3 is a flow diagram of a calibration method for operating a CW short-range radar system in obtaining calibrated intermediate frequency in-phase and quadrature outputs, in accordance with the present invention.

The method starts in a step 310, in which at least one reflective static calibration target is measured using the CW short-range radar system at a plurality j of at least four different target ranges $R_c = k\lambda/2 + R_j$ from the radar transceiver CW short-range radar system. Here, as explained before, Rc is the target range between the calibration target and the radar transceiver, $\lambda$ is the wavelength of the radar beam provided by the radar transceiver, signifying a periodicity of the DC offset as a function of target range, k is any non-negative integer, and Rj is the remainder range. As is common in the art, the term range is used for a distance measured along the line of sight. Due to the inherent periodicity, the target ranges differ in their value of a remainder range Rj, and it is important that the at least four different target ranges differ in their respective values of remainder range.

In the measuring process for each of the j target ranges, at which the calibration target is measured, a CW radar beam is transmitted toward the calibration target, and a received CW radar beam intensity and phase of the CW radar beam fraction that is scattered back from the calibration target is measured as a CW radar measurement signal carrying intensity and phase information. In an exemplary implementation of the measurement procedure, a corner cube (CC) as an exemplary calibration target is placed approximately 0.5m away from a 2×2 MIMO front-end board. The MIMO board is operated in the CW mode at a single tone of 61.2 GHz within the ISM-band. The CC is moved by 400 steps of 50 $\mu$m and at each step the dc level at the IF outputs are sampled.

Subsequently, in a step 320, the received CW radar beam intensity and phase processed by performing a quadrature down-conversion of the received CW radar measurement signal to obtain measured intermediate frequency in-phase outputs $V_{IFcal,I}(j)$ and intermediate frequency quadrature outputs $V_{IFcal,Q}(f)$. Using these obtained intermediate frequency in-phase and quadrature outputs, the following equation system of 2j, that is at least 8, equations is solved using known processor-implemented techniques

$$V_{IFcal,I}(j) = \cos\left(\frac{4\pi R_j}{\lambda}\right) + V_{L,I}$$

$$V_{IFcal,Q}(j) = (1 + \epsilon)\sin\left(\frac{4\pi R_j}{\lambda} + \theta\right) + V_{L,Q}$$

,

This way, 4+j unknown parameter values are determined which are the j remainder position values $R_j$, $\epsilon$, $\theta$, $V_{L,I}$, and $V_{L,Q}$, wherein $\epsilon$ denotes an amplitude mismatch and $\theta$ denotes a phase mismatch between the quadrature signals, $V_{L,I}$ and $V_{L,Q}$ denote respective DC offsets. Thus, with the determined values of the amplitude mismatch $\epsilon$ and the phase mismatch $\theta$ between the quadrature signals, and with the respective DC offsets $V_{L,I}$ and $V_{L,Q}$ of the in-phase and quadrature components, impairments in measured signals of an application radar measurement can be compensated numerically.

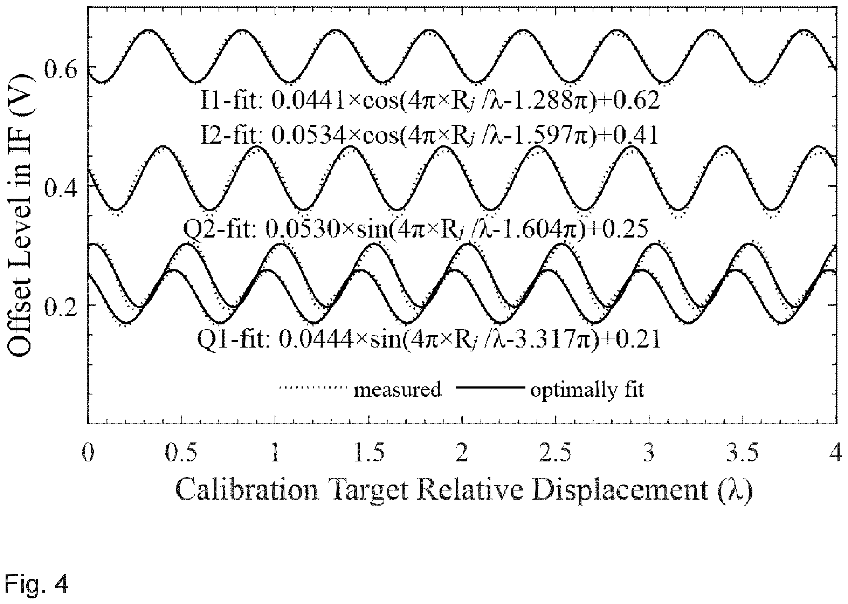

Fig. 4 is a diagram of measured DC offset levels as a function of a relative position of a calibration target, including fitted functions, for the exemplary implementation of the measurement procedure described above, including a corner cube (CC) as a calibration target that is measured by a 2×2 MIMO front-end board. The procedure is not limited to the present exemplary MIMO implementation. For instance, while digital MIMO may be used to steer the beam, this is not required if only using one target (CC) and moving this target along a line.

The measured dc levels at the IF outputs of both channels are plotted in Fig. 4 when both TX are active. The plotted curve not only shows the measured DC offset (dotted curves), but also sinusoidal fits (full lines). The fits allow determining the phase and amplitude imbalance. First, initial estimates of sinusoidal fits are made, and later a fit using a least-squares technique. The more measurements are made, i.e., the higher the number of relative displacements used, the better the fitting result and the calibration result is The measured levels fit excellently to the theoretical expectations. Therefore, the impairments in both channels (I1, Q1; I2, Q2) can be confidently derived. Here, the amplitude mismatches between the I and Q channels are found to be less than 0.1 dB for both TRX chips of the 2x2 MIMO board used. Moreover, the phase mismatches in the RX channels are found here to be about 1.5°. The dc offset due to the leakage terms in (2.25) are given by the last offset term in the fitted functions, ranging from 0.21V to 0.62 V. The parameters extracted from this calibration step may be used the processing of the measurement data obtained thereafter to compensate for the mentioned impairments.

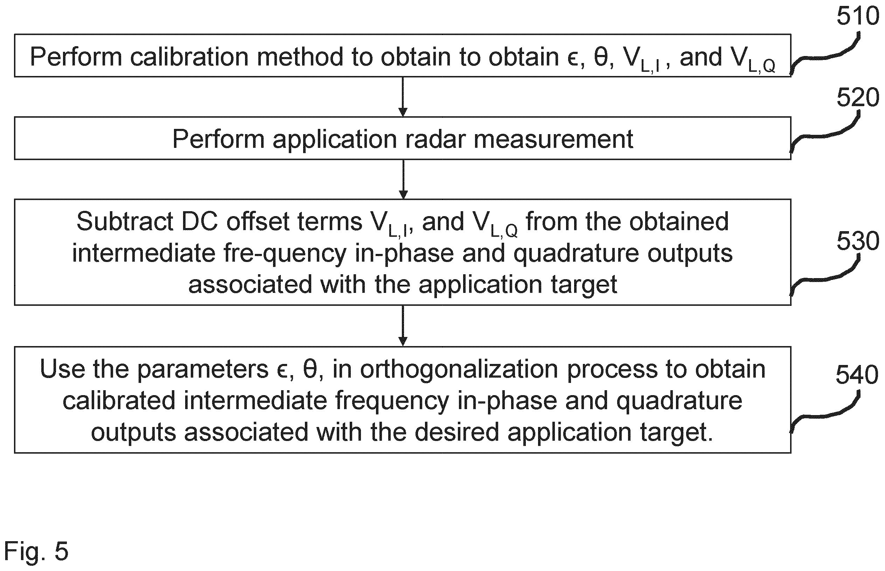

Fig. 5 is a flow diagram of a method for operating a CW radar system. The method begins with a step 510 comprising a calibration process as described in the context of Figs. 3 and 4. Subsequently, with step 520, an application radar measurement to measure one or more application targets is performed. Preforming the application radar measurement comprises in the present method:

- transmitting the CW radar beam toward a desired application target;

- measuring a received CW radar beam intensity and phase of the CW radar beam that is scattered back from the desired application target as a CW radar measurement signal carrying intensity and phase information; and

- performing a quadrature down-conversion of the received CW radar measurement signal to obtain measured intermediate frequency in-phase and quadrature outputs associated with the desired application target

Subsequently, in step 530, the DC offset terms $V_{L,I}$, and $V_{L,Q}$ are subtracted from the obtained intermediate frequency in-phase and quadrature outputs associated with the desired application target. Furthermore, in step 540, using the determined calibration parameters $\varepsilon$ and $\theta$ in an orthogonalization process such as the Gram-Schmidt orthogonalization process, calibrated intermediate frequency in-phase and quadrature outputs associated with the desired application target are determined. From these calibrated intermediate frequency in-phase and quadrature outputs associated with the desired target, a desired useful signal may be extracted in a subsequent step (not shown).

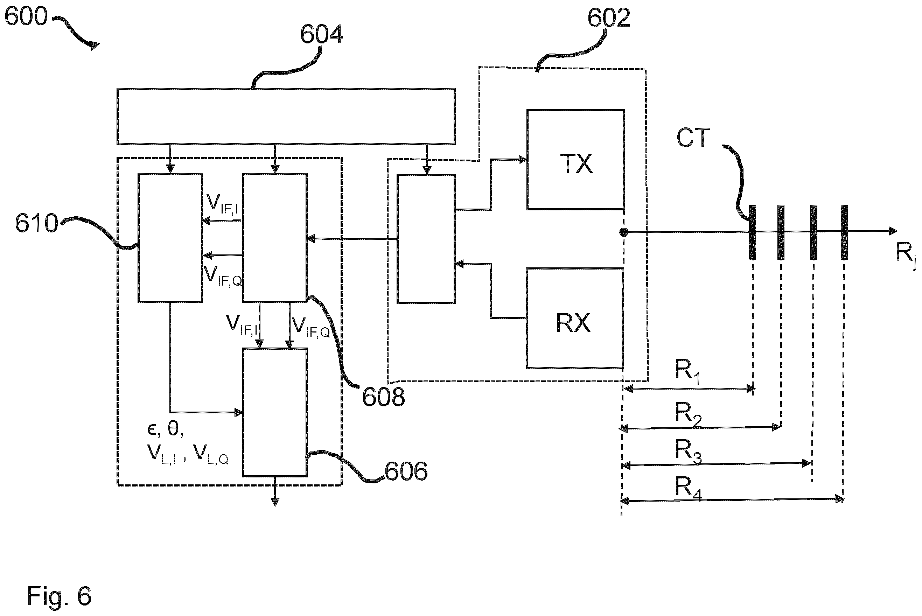

Fig. 6 is a simplified block diagram of a CW short-range radar system 600 in accordance with the present invention. The CW short-range radar system 600 comprises a measurement unit 602. The measurement unit 602 comprises a transmitter TX and a receiver RX, which seen together form a radar transceiver, and RF circuitry RF for generating and handling the RF signals on the transmitting and receiving side, including modulation and amplification. A controller 604 controls operation of the measurement unit, and in particular controls an operational setting of the CW short-range radar system 600. In particular, under control of the controller 600, the CW short-range radar system 600 may be operated to either perform calibration measurements or an application radar measurement at a given point in time, as explained in the following.

For performing calibration, the measurement unit 602 is operated to perform a calibration measurement of at least one reflective static calibration target at a plurality j of at least four different target ranges $R_c = k\lambda/2 + R_j$ from the radar transceiver that differ in their value of a remainder range Rj, as explained before. For the purpose of a simple illustration, Fig. 6 shows a simplified representation of calibration target CT positioned at j=4 exemplary target ranges $R_1$, $R_2$, $R_3$, and $R_4$. In performing the calibration measurement for each of the j target ranges, at which the calibration target is to be measured, the measurement unit is operated to

- transmit a CW radar beam toward the calibration target;

- measure a received CW radar beam intensity and phase of the CW radar beam that is scattered back from the calibration target as a CW radar measurement signal carrying intensity and phase information;

- perform a quadrature down-conversion of the received CW radar measurement signal to obtain measured intermediate frequency in-phase and quadrature outputs.

For performing an application measurement of a desired application target, the measurement unit 600 is operated to

- transmit the CW radar beam toward the desired application target; and
- measure a received CW radar beam intensity and phase of the CW radar beam that is scattered back from the desired application target, as a CW radar measurement signal carrying intensity and phase information;

The CW short-range radar system 600 further comprises a signal processing unit 606, which comprises a mixer circuit 608, which is configured to perform a quadrature down-conversion of the received CW radar measurement signal to obtain measured intermediate frequency in-phase and quadrature outputs $V_{IF,I}$ and $V_{IF,Q}$. A calibration processor 610 is configured, using the obtained intermediate frequency in-phase and quadrature outputs obtained for the calibration target, to solve the following equation system of 2j, that is at least 8, equations

$$V_{IFcal,I}(j) = \cos\left(\frac{4\pi R_j}{\lambda}\right) + V_{L,I}$$

$$V_{IFcal,Q}(j) = (1 + \epsilon)\sin\left(\frac{4\pi R_j}{\lambda} + \theta\right) + V_{L,Q}$$

,

to determine 4+j unknown parameter values which are the j remainder position values $R_j$, $\varepsilon$, $\theta$, $V_{L,I}$, and $V_{L,Q}$. Notably, measurements at more distances (the more the better) provide more equations which result in a higher accuracy of impairment estimation, i.e. calibration.

A radar signal processor 612 receives the obtained intermediate frequency in-phase and quadrature outputs obtained for the desired application target, and removes the DC offset terms VL,I, and VL,Q from the obtained intermediate frequency in-phase and quadrature outputs associated with the desired application target. Moreover, using the parameters $\varepsilon$ and $\theta$ in an orthogonalization process, the radar signal processor obtains calibrated intermediate frequency in-phase and quadrature outputs associated with the desired application target, and extracts a desired useful signal from the calibrated intermediate frequency in-phase and quadrature outputs associated with the desired application target. The extracted signal is the output of the radar signal processor 612 (cf, arrow on the bottom of 612) and is a usable signal for further processing, visualizing, etc.

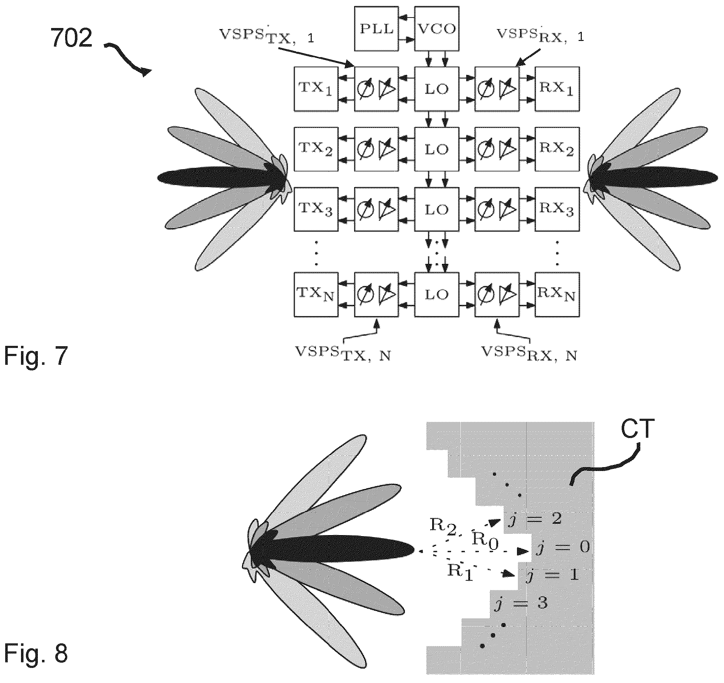

Fig. 7 is an illustration of a further exemplary measurement unit 702 of another CW short range radar system. The measurement unit 702 employs a MIMO antenna system with N transmit antenna elements $TX_1$, $TX_2$, $TX_3$, ..., $TX_N$ and N receive antenna elements $RX_1$, $RX_2$, $RX_3$, ..., $RX_N$ that enable RF beamforming on the transmitter end and on the receiving end.

Vector-sum phase shifters (VSPS) are provided on the transmitter side ($VSPS_{TX, 1}$.... $VSPS_{TX, N}$) to control the beamforming on the TX side. The VSPS control phase and amplitude control across each transmit antenna element in the array. This enables accurate beamsteering to direct the signal energy toward a target or in an otherwise specified direction. This enables continuous and fine-grained phase adjustment for directional control and power efficiency.

Further vector-sum phase shifters $VSPS_{RX, 1}$.... $VSPS_{RX, N}$ is provided to control the beamforming on the RX side to adjust the phase and amplitude of the received signals provided from each receive antenna element, enabling precise manipulation of the signal's directionality. That is, by controlling the phase shift applied to each antenna's incoming signal, the vector-sum phase shifters $VSPS_{RX, 1}$.... $VSPS_{RX, N}$ jointly steer the sensitivity of the antenna array to enhance signals from a desired direction while suppressing signals from other directions.

The VSPSs thus deliver the control values to each antenna element (gain and phase shift). These values are DC signals. In case of the TX, the local oscillator (LO) signal is directly fed into this network. In case of the RX, the incoming signals are all fed into separate dedicated VSPSs (without summing) and then fed into a IQ-down conversion mixer which provides the actual IF signal. The mixers receive a local oscillator signal from a LO generator driven by a PLL.

Fig. 8 is an illustration of a calibration target CT that is suitable for co-integration with a measurement unit into a common housing. The calibration target CT is particular suited for use in combination with a measurement unit MIMO module such as the measurement unit 702 of Fig. 7. Implementing a low-cost and compact reflector design, the metallic calibration target CT has a staggered notch on its surface, as sketched in Fig. 8. Such a unit in the vicinity of the measurement unit provides the flexibility to easily repeat the calibration step on regular intervals, e.g., for a background calibration, to be safe against drifts in the impairment and dc offset terms, which may happen due to various environmental changes (such as temperature), variations in the dc supply conditions, or aging of the radar circuit parts and so on. The repetition interval of the calibration step can be adaptive based on the feedback from the ellipse fitting algorithm.

In summary, a calibration method for operating a CW short-range radar system in obtaining calibrated intermediate frequency in-phase and quadrature outputs comprises measuring at least one reflective static calibration target at a plurality of at least four different target ranges and processing the received CW radar measurement signal by performing a quadrature down-conversion of the received CW radar measurement signal to obtain measured intermediate frequency in-phase outputs and intermediate frequency quadrature outputs. These are used to solve a system of equations for calibration parameter values including an amplitude mismatch a phase mismatch between the quadrature signals, and respective DC offsets of the quadrature signals.

**Claims**

1.  A calibration method for operating a continuous-wave, herein CW, short-range radar system, in obtaining calibrated intermediate frequency in-phase and quadrature outputs, the method comprising:

    - measuring at least one reflective static calibration target at a plurality j of at least four different target ranges $R_c = k\lambda/2 + R_j$ from a radar transceiver that differ in their value of a remainder range Rj, wherein

        $R_c$ is the target range between the calibration target and the radar transceiver,
        $\lambda$ is a wavelength of the radar beam provided by the radar transceiver, and
        k is any non-negative integer, signifying a periodicity of the DC offset as a function of target range

    - wherein the measuring comprises, for each of the j target ranges, at which the calibration target is measured,

        - transmitting a CW radar beam toward the calibration target;
        - measuring a received CW radar beam intensity and phase of the CW radar beam that is scattered back from the calibration target, as a CW radar measurement signal carrying intensity and phase information;

- processing the received CW radar measurement signal by

- performing a quadrature down-conversion of the received CW radar measurement signal to obtain measured intermediate frequency in-phase outputs $V_{IFcal,I}(j)$ and intermediate frequency quadrature outputs $V_{IFcal,Q}(j)$;
- using the obtained intermediate frequency in-phase and quadrature outputs, solving the following equation system of 2j, that is at least 8, equations

$$V_{\mathrm{IFcal,I}}(j) = \cos\left(\frac{4\pi R_j}{\lambda}\right) + V_{\mathrm{L,I}}$$

$$V_{\mathrm{IFcal,Q}}(j) = (1 + \epsilon)\sin\left(\frac{4\pi R_j}{\lambda} + \theta\right) + V_{\mathrm{L,Q}} \quad ,$$

to determine 4+j unkown parameter values which are the j remainder position values $R_j$, $\varepsilon$, $\theta$, $V_{L,I}$, and $V_{L,Q}$, wherein $\varepsilon$ denotes an amplitude mismatch and $\theta$ denotes a phase mismatch between the quadrature signals, $V_{L,I}$ and $V_{L,Q}$ denote respective DC offsets.

2. The method of claim 1, wherein the orthogonalization process is a Gram-Schmidt orthogonalization process and comprises determining the calibrated intermediate frequency in-phase and quadrature outputs by calculating

$$\begin{bmatrix} V_{\mathrm{IF,I,cal}}(t) \\ V_{\mathrm{IF,Q,cal}}(t) \end{bmatrix} = \begin{bmatrix} 1 & 0 \\ -\tan(\theta) & \frac{\sec(\theta)}{1+\epsilon} \end{bmatrix} \begin{bmatrix} V_{\mathrm{IF,I}}(t) - V_{\mathrm{L,I}} \\ V_{\mathrm{IF,Q}}(t) - V_{\mathrm{L,Q}} \end{bmatrix} .$$

3. The method of claim 1 or 2, wherein providing the at least one reflective static calibration target at a plurality j of at least four different target ranges comprises

- providing at a fixed position from a measurement unit for transmitting and receiving the CW radar beam a single calibration target that has different reflective surfaces, the different reflective surfaces being arranged at the different target ranges, wherein
- the calibration target may be arranged within a housing of the CW radar system that further comprises the measurement unit.

4. The method of claim 1 or 2, wherein measuring the at least one reflective static calibration target at a plurality j of at least four different target ranges comprises

- positioning the radar system in an environment comprising an arbitrary set of reflective static objects at different distances from the positioned radar system, and
- selecting the calibration targets from the arbitrary set of reflective static objects.

5. The method of any of the preceding claims, wherein

- transmitting the CW radar beam toward the calibration target comprises performing electronic beam steering of a MIMO antenna system.

6. The method of any of the claims 1 to 4, wherein

- transmitting the CW radar beam toward the calibration target comprises performing steering of an antenna by driving a mechanical alignment system.

7. A method for operating a CW radar system, the method comprising

- performing the calibration method of any of the claims 1 to 6; and

13

- performing an application radar measurement to measure one or more application targets, comprising

- transmitting the CW radar beam toward a desired application target;
- measuring a received CW radar beam intensity and phase of the CW radar beam that is scattered back from the desired application target as a CW radar measurement signal carrying intensity and phase information;
- performing a quadrature down-conversion of the received CW radar measurement signal to obtain measured intermediate frequency in-phase and quadrature outputs associated with the desired application target;
- removing the DC offset terms $V_{L,I}$, and $V_{L,Q}$ from the obtained intermediate frequency in-phase and quadrature outputs associated with the desired application target;
- using the parameters $\varepsilon$, $\theta$, in an orthogonalization process to obtain calibrated intermediate frequency in-phase and quadrature outputs associated with the desired application target; and
- extracting a desired useful signal from the calibrated intermediate frequency in-phase and quadrature outputs associated with the desired target.

8. The method of claim 7, wherein the calibration method is performed repeatedly over an operation time of the CW radar system to update the calibration, wherein repetitions may be triggered in response to environmental sensor signals received from one or more external environmental sensors meeting a predefined calibration trigger criterion.

9. The method of claim 7 or 8, wherein the calibration method is performed as a background process while performing the application radar measurement as a foreground process.

10. A continuous-wave, herein CW, short-range radar system, comprising

- a measurement unit, which is configured to:

- perform a calibration measurement of at least one reflective static calibration target at a plurality j of at least four different target ranges $R_c = k\lambda/2 + R_j$ from a radar transceiver that differ in their value of a remainder range Rj, wherein

$R_c$ is the target range between the calibration target and the radar transceiver,
$\lambda$ is a wavelength of the radar beam provided by the radar transceiver, signifying a periodicity of the DC offset as a function of target range k is any non-negative integer, and
Rj is the remainder range;

- in performing the calibration measurement for each of the j target ranges, at which the calibration target is to be measured, to

- transmit a CW radar beam toward the calibration target;
- measure a received CW radar beam intensity and phase of the CW radar beam that is scattered back from the calibration target, as a CW radar measurement signal carrying intensity and phase information;
- perform a quadrature down-conversion of the received CW radar measurement signal to obtain measured intermediate frequency in-phase and quadrature outputs; and

- in performing an application measurement of a desired application target,

- to transmit the CW radar beam toward the desired application target;
- to measure a received CW radar beam intensity and phase of the CW radar beam that is scattered back from the desired application target;

- a signal processing unit, which is configured,

- to perform a quadrature down-conversion of the received CW radar measurement signal to obtain measured intermediate frequency in-phase and quadrature outputs;
- using the obtained intermediate frequency in-phase and quadrature outputs obtained for the calibration target, to solve the following equation system of 2j, that is at least 8, equations

$$V_{IFcal,I}(j) = \cos\left(\frac{4\pi R_j}{\lambda}\right) + V_{L,I}$$

$$V_{IFcal,Q}(j) = (1 + \epsilon)\sin\left(\frac{4\pi R_j}{\lambda} + \theta\right) + V_{L,Q}$$

,

to determine 4+j unknown parameter values which are the j remainder position values $R_j$, $\varepsilon$, $\theta$, $V_{L,I}$, and $V_{L,Q}$;
- using the obtained intermediate frequency in-phase and quadrature outputs obtained for the desired application target, to remove the DC offset terms $V_{L,I}$, and $V_{L,Q}$ from the obtained intermediate frequency in-phase and quadrature outputs associated with the desired application target;
- using the parameters $\varepsilon$, $\theta$, in an orthogonalization process, to obtain calibrated intermediate frequency in-phase and quadrature outputs associated with the desired target; and to
- extract a desired useful signal from the calibrated intermediate frequency in-phase and quadrature outputs associated with the desired application target.

11. The CW radar system of claim 10, wherein the signal processing unit is configured to perform as the orthogonalization process a Gram-Schmidt orthogonalization process, comprising determining the calibrated intermediate frequency in-phase and quadrature outputs by calculating

$$\begin{bmatrix} V_{IF,I,cal}(t) \\ V_{IF,Q,cal}(t) \end{bmatrix} = \begin{bmatrix} 1 & 0 \\ -\tan(\theta) & \frac{\sec(\theta)}{1+\epsilon} \end{bmatrix} \begin{bmatrix} V_{IF,I}(t) - V_{L,I} \\ V_{IF,Q}(t) - V_{L,Q} \end{bmatrix}$$

.

12. The CW radar system of claim 10 or 11, wherein the calibration target is a single calibration target that is arranged at a fixed position and together with the measurement unit within a housing of the CW radar system and that has different reflective surfaces, the different reflective surfaces being arranged at the different target ranges.

13. The CW radar system of any of the claims 10 to 12, wherein the measurement unit comprises a MIMO antenna system for transmitting the CW radar beam toward the calibration target and a measurement control unit, which is configured to perform electronic beam steering of the MIMO antenna system.

14. The CW radar system of any of the claims 10 to 13, which is configured to perform the application radar measurement to measure one or more application targets as a foreground process and to perform the calibration method of any of the claims 1 to 6 as a background process embedded in the foreground process.

15. The CW radar system of claim 14, wherein the measurement unit is configured to perform the calibration method repeatedly over an operation time of the CW radar system to update the calibration.

Fig. 1

Fig. 2

EP 4 745 617 A1

Measure calibration target at ≥ 4 target ranges

310

Obtain in-phase and quadrature IF outputs $V_{IFcal,I}(j)$ and $V_{IFcal,Q}(j)$;

320

Solve equation system of 2j equations:

$$V_{IFcal,I}(j) = \cos\left(\frac{4\pi R_j}{\lambda}\right) + V_{L,I}$$

$$V_{IFcal,Q}(j) = (1 + \epsilon)\sin\left(\frac{4\pi R_j}{\lambda} + \theta\right) + V_{L,Q}$$

to obtain $R_j$, $\epsilon$, $\theta$, $V_{L,I}$, and $V_{L,Q}$.

330

Fig. 3

I1-fit: $0.0441 \times \cos(4\pi \times R_j / \lambda - 1.288\pi) + 0.62$

I2-fit: $0.0534 \times \cos(4\pi \times R_j / \lambda - 1.597\pi) + 0.41$

Q2-fit: $0.0530 \times \sin(4\pi \times R_j / \lambda - 1.604\pi) + 0.25$

Q1-fit: $0.0444 \times \sin(4\pi \times R_j / \lambda - 3.317\pi) + 0.21$

················ measured ———— optimally fit

Fig. 4

EP 4 745 617 A1

EP 4 745 617 A1

Perform calibration method to obtain to obtain $\epsilon$, $\theta$, $V_{L,I}$, and $V_{L,Q}$ — 510

Perform application radar measurement — 520

Subtract DC offset terms $V_{L,I}$, and $V_{L,Q}$ from the obtained intermediate frequency in-phase and quadrature outputs associated with the application target — 530

Use the parameters $\epsilon$, $\theta$, in orthogonalization process to obtain calibrated intermediate frequency in-phase and quadrature outputs associated with the desired application target. — 540

Fig. 5

Fig. 6

Fig. 7

Fig. 8

## EP 4 745 617 A1

EUROPEAN SEARCH REPORT

**Application Number**

EP 25 16 6027

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/022866 A1 (WALTON ERIC K [US] ET AL) 2 February 2006 (2006-02-02) * paragraphs [0002], [0039], [0086], [0137], [0209], [0212] - [0218], [0229] - [0235]; figures 31,42,43 * | 1-15 | INV. G01S7/35 G01S7/40 G01S13/42 |
| X | US 2019/204413 A1 (JAEGER HERBERT [AT] ET AL) 4 July 2019 (2019-07-04) * paragraphs [0004] - [0006], [0058] - [0080]; figures 1A, 1B, 5-9 * | 1-15 | ADD. G01S13/88 |

TECHNICAL FIELDS
SEARCHED (IPC)

G01S

The present search report has been drawn up for all claims

| Place of search | Date of completion of the search | Examiner |
|---|---|---|
| Munich | 8 July 2025 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 6027

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2025

| Patent document cited in search report | Publication date | Patent family member(s) | Publication date |
|---|---|---|---|
| US 2006022866 A1 | 02-02-2006 | CA 2529463 A1 | 19-04-2006 |
| | | EP 1810054 A2 | 25-07-2007 |
| | | US 2006022866 A1 | 02-02-2006 |
| | | WO 2006044911 A2 | 27-04-2006 |
| US 2019204413 A1 | 04-07-2019 | DE 102015112392 B3 | 17-11-2016 |
| | | US 2017031005 A1 | 02-02-2017 |
| | | US 2019204413 A1 | 04-07-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. FITZGIBBON** ; **M. PILU** ; **R. B. FISHER**. Direct least square fitting of ellipses. *IEEE Transactions on Pattern Analysis and Machine Intelligence*, May 1999, vol. 21 (5), 476-480